# EUROPEAN PATENT APPLICATION

(11) **EP 4 430 949 A1**
(43) Date of publication of application: **18.09.2024**
(21) Application number: 24163503.6
(22) Date of filing: 14.03.2024
(51) Int. Cl.: A21D 13/066, A21D 13/41, A21D 13/04, A21D 8/04, A21D 2/36

(54) **COMPOSITION FOR THE PREPARATION OF A GLUTEN-FREE DOUGH FOR BREAD, FLATBREAD AND PIZZA AND METHOD FOR MAKING SAID GLUTEN-FREE DOUGH**

(30) Priority: 15.03.2023 IT 202300004902
(71) Applicant: Enjoyfood S.r.l., 24128 Bergamo (BG) (IT)
(72) Inventor: DURIZZI, Lorenzo, Telgate (BG) (IT)
(74) Representative: Fabiano, Piero

(57) **Abstract**

A composition for the preparation of gluten-free dough of bread, focaccia and pizza and a method for making said gluten-free dough with the aforesaid composition are described, the latter comprising
- 20% to 30% by weight of a pre-fermented mixture of gluten-free flours;
- 30% to 40% by weight of maize starch;
- 50% to 30% by weight of a mixture of gluten-free flours, containing rice flour and/or buckwheat flour and sorghum flour;
- 2% to 3% by weight of brewer's yeast;
- 0.5% to 1% by weight of at least one thickener,
- 6% to 8% by weight of oil,
wherein the percentages refer to the total weight of the composition.

## Description

### Field of the invention

The present invention refers to the field of the compositions for the preparation of bread, focaccia and pizza and, in particular, to compositions for the preparation of gluten-free dough for bread, focaccia and pizza. More particularly, the present invention concerns a composition for the preparation of gluten-free dough for bread, focaccia and pizza and a method for making said gluten-free dough.

### Known art

As known, flours commonly used to prepare pizza dough (wheat, Kamut, multi-grain) are not suitable for those suffering from coeliac disease because they contain gluten.

Coeliac disease is a real disease: an immune response to gluten intake, which causes symptoms of different kinds, from gastrointestinal to dermatological.

There are currently no drugs that can cure it, so the only solution remains that of a scrupulous gluten-free diet.

In an attempt to diversify the diet of people with coeliac disease, gluten-free foods are continually being offered on the market.

In particular, there are different gluten-free pizza preparations or pizza bases. However, commercially available gluten-free pizza preparations or bases have a non-negligible content of synthetic thickeners to bind the dough, which results in a qualitative and organoleptic lowering of the product, especially to the palate, and a harmfulness for those who consume it in the long run.

The Applicant therefore addressed the problem of resolving the limitations of the known art by producing a composition for the preparation of dough for bread, focaccia and pizza and a method for making said dough that did not have synthetic thickeners.

### Summary of the invention

Thus the invention, in a first aspect thereof, concerns a composition for the preparation of gluten-free bread, focaccia and pizza dough comprising a mixture of pre-fermented gluten-free flours, a mixture of gluten-free flours, brewer's yeast, at least one thickener and oil.

The pre-fermented gluten-free flour mixture is made from a mixture of gluten-free flours, brewer's yeast and water. Preferably, before being used to prepare bread, focaccia and pizza dough, this mixture is left to rest for 18 to 24 hours at a temperature between 4°C and 6°C, in order to allow the pre-fermentation of the said mixture.

The mixture of gluten-free flours, which undergoes pre-fermentation, preferably contains the same flours used in the mixture of gluten-free flours which is used in the composition of the present invention for the preparation of the dough for bread, focaccia and pizza, which contains rice flour, buckwheat flour and sorghum flour.

In a preferred implementation, the composition of the present invention comprises:
- 20% to 30% by weight of a pre-fermented mixture of gluten-free flours;
- 30% to 40% by weight of maize starch,
- 30% to 50% by weight of a mixture of gluten-free flours, containing rice flour and/or buckwheat flour and sorghum flour;
- 2% to 3% by weight of brewer's yeast;
- 0.5% to 1% by weight of at least one thickener,
- 6% to 8% by weight of oil,
wherein the percentages refer to the total weight of the said composition.

Preferably, the mixture of gluten-free flours contains 30% to 40% by weight of maize starch, 20% to 35% by weight of rice flour and/or 6% to 10% by weight of buckwheat flour and 4% to 5% by weight of sorghum flour with reference to the weight of the said mixture of flours. In the event that said mixture of gluten-free flours contains both rice flour and buckwheat flour, their combined amount in the mixture is between 26% and 35% by weight of the said mixture of flours.

Examples of the thickener that can be used in the composition of the present invention are maize starch in an amount between 30% and 40% by weight, E464 in an amount between 0.05% and 0.07% by weight and tapioca in an amount between 1% and 2% to the total weight of the composition.

The oil used in the composition of the present invention can be any type of food oil commonly used for the preparation of bread, focaccia and pizza, advantageously the oil is olive oil or extra-virgin olive oil.

The brewer's yeast that can be used in the composition of the present invention can be selected from dry brewer's yeast and fresh brewer's yeast.

The present invention, in the aforesaid aspect, may have at least one of the preferred features described hereunder.

Preferably, the gluten-free composition of the present invention further comprises vegetable fibres in an amount equal to at least 2% by weight to the total weight of the composition, the vegetable fibres being selected from inulin and psyllium.

Conveniently, the composition further comprises red teff flour in an amount greater than at least 3% by weight to the total weight of the composition.

Advantageously, in order to help thicken the dough, the gluten-free composition further comprises guar seed flour in an amount equal to or greater than 0.8% by weight, preferably in an amount between 0.5% and 0.8% by weight to the total weight of the composition.

Conveniently, the composition of the present invention further comprises fructose and/or maize malt powder in an amount greater than at least 1% by weight, preferably in an amount between 1% and 1.20% by weight to the total weight of the composition.

Conveniently, the composition further comprises linseed flour and chia seed flour in an amount greater than at least 1% by weight, preferably in an amount between 1% and 3% by weight of the composition.

Preferably, the composition of the present invention further comprises apple extract flour in an amount greater than at least 0.5% by weight, preferably in an amount between 0.5% and 0.8% by weight of the composition.

The dough is prepared from the aforesaid gluten-free composition of the present invention by adding water in an amount between 90% and 115% by weight to the total weight of the composition.

Hydration of the dough varies in the range of 90% to 115% per kilogram of dough and, generally, hydration reaches 115% calculated per kilogram of dough.

According to another aspect, the present invention concerns a method for making gluten-free dough for bread, focaccia and pizza with the composition of the present invention, comprising the steps of:
- a) preparing a pre-set amount of pre-fermented mixture of gluten-free flours by mixing water with a mixture of gluten-free flours and brewer's yeast and leave this mixture for a period of time between 18 and 24 hours at a temperature between 4 °C and 6 °C to obtain a desired fermentation;
- b) kneading an amount between 30% and 50% by weight of a mixture of gluten-free flours with an amount between 20% and 30% by weight of the flour mixture prepared in step a) of the method, and with an amount of water between 90% and 115% by weight to the total weight of the said mixture of gluten-free flours;
- c) adding an amount of brewer's yeast powder greater than or equal to 0.7% by weight of the said amount of mixture of flours or an amount between 1.5% and 2% by weight of the gluten-free composition, to the dough obtained in step b);
- d) continuing to knead the product obtained in step c);
- e) adding an amount of oil in an amount greater than or equal to 6% by weight of the said amount of mixture of gluten-free flours or in an amount between 6% and 8% by weight of the gluten-free composition, to the dough obtained in step d); and
- f) letting the dough obtained in step e) rest for at least 15 minutes at a temperature higher than 16 °C.

Preferably, the method further comprises a step g) of adding a certain amount of salt greater than or equal to 0.8% by weight of the said amount of mixture of gluten-free flours downstream of step c).

Preferably, the method further comprises a step h) of:
- making, upstream of the said step f), a plurality of dough balls of at least 250 grams and at most 350 grams.

Preferably, the method further comprises a step i) of:
- letting said plurality of balls rise for at least 90 minutes at a temperature greater than or equal to 20 °C.

Further characteristics and advantages of the invention will become more apparent from the detailed description of some preferred, but not exclusive, embodiments of a composition for the preparation of gluten-free dough for bread, focaccia and pizza and a method for making said dough for bread, focaccia and pizza according to the present invention.

### Detailed description of embodiments of the invention

With reference to the figures, a composition for the preparation of gluten-free dough for bread, focaccia and pizza according to the present invention comprises:
- 20% to 30% by weight of a pre-fermented mixture of gluten-free flours;
- 30% to 50% by weight of a mixture of gluten-free flours, containing rice flour and/or buckwheat flour and sorghum flour;
- 2% to 6% by weight of brewer's yeast;
- 0.5% to 1% by weight of at least one thickener,
- 6% to 8% by weight of oil,
wherein the percentages refer to the total weight of the composition.

Preferably, the mixture of gluten-free flours contains 20% to 35% by weight of rice flour and/or 6% to 10% by weight of buckwheat flour and 4% to 5% by weight of sorghum flour.

The mixture of pre-fermented gluten-free flours is a "starter" to facilitate the fermentation of the dough of gluten-free flours. Preferably, the mixture of gluten-free flours is prepared by mixing a pre-set amount of gluten-free flours with brewer's yeast and water. This obtained mixture is left to rest for a period of time between 18 hours and 24 hours at a temperature between 4 °C and 6 °C to obtain adequate pre-fermentation of the mixture able to be used together with the other ingredients of the composition of the present invention.

Preferably, 20% to 30% of this said mixture is prepared from a mixture of gluten-free flours, 2% to 6% of brewer's yeast and 90% to 115% of water, wherein the percentages refer to the total weight of the same mixture. The mixture of flours preferably corresponds to the one used for the mixture of gluten-free flours to be kneaded in the composition of the present invention.

Examples of the thickener that can be used in the composition of the present invention are maize starch in an amount between 30% and 40% by weight, E464 in an amount between 0.05% and 0.07% by weight and tapioca in an amount between 1% and 2% to the total weight of the composition.

In a preferred embodiment, the composition of the present invention comprises both rice flour and buckwheat flour, each present in an amount greater than 2.5% by weight to the mixture of gluten-free flours, preferably in an amount between 10% and 15% by weight of the total weight of the mixture of gluten-free flours to be kneaded.

Preferably, the amount of rice flour is greater than the amount of buckwheat flour. Even more preferably, the amount of rice flour is about twice the amount of buckwheat flour.

The type of rice flour is not limiting to obtain the desired result of the end product, whereby for example Venus rice flour, brown rice flour etc. can be used.

Maize starch is preferably present in an amount less than 80% by weight to the weight of the composition of the present invention.

The gluten-free composition of the present invention further comprises vegetable fibres in an amount equal to at least 2% by weight, preferably in an amount between 2% and 3% to the weight of the composition; the vegetable fibres being selected from inulin and psyllium or a mixture thereof.

The composition of the present invention further comprises red teff flour in an amount greater than at least 3% by weight, preferably in an amount between 2% and 3% by weight to the weight of the composition.

To help thicken the dough, the composition of the present invention further comprises guar seed flour in an amount equal to or greater than 0.8% by weight, preferably in an amount between 0.8 and 1% by weight to the weight of the composition.

Preferably, the composition of the present invention further comprises guar seed flour in an amount less than 2% by weight, preferably in an amount between 1% and 2% by weight to the weight of the composition.

As sweeteners, the gluten-free composition of the present invention may comprise fructose and/or maize malt powder in an amount greater than 2% by weight, advantageously in an amount between 0.8% and 1% by weight to the weight of the composition. Preferably, the gluten-free composition of the present invention comprises both fructose and maize malt. The total amount of fructose and/or maize malt powder present in the composition is less than 4% by weight.

The fructose percentage may be higher than the amount of maize malt.

Sorghum flour is generally present in an amount less than 8% by weight to the weight of the mixture of gluten-free flours.

In the preferred embodiment, the composition of the present invention further comprises linseed and chia seed flour in an amount greater than at least 1% by weight, preferably in an amount between 1% and 3% by weight to the weight of the gluten-free flour mixture.

In the preferred embodiment, the composition of the present invention further comprises apple extract in an amount higher than at least 0.5% by weight to the weight of the composition. However, the amount of apple extract present in the mixture does not exceed 3% by weight.

The apple flour is a natural sugar and allows to reduce the sugar load in bread, focaccia and pizza, which are produced with the composition and the method of the present invention. This characteristic of the composition and method of the present invention is particularly advantageous, because in the case of intolerant people, it is essential to keep the sugar load as low as possible. As opposed to the bread, focaccia and pizza that can be produced with the composition of the present invention, the commercial products on the market contain simple sugars that raise their sugar content. The use of the pre-ripened mixture ("starter") of gluten-free flours of the gluten-free composition of the present invention allows to accelerate the process of ripening the dough during the dough preparation method and allows the dough to be easily processed. Furthermore, the use of this pre-ripened mixture for the preparation of gluten-free dough according to the present invention allows to obtain a light, fragrant final product with aromas and flavours of cereals without the after-taste of synthetic/artificial substances, which is typical of the commercial gluten-free products.

The present invention further relates to a method for making gluten-free dough for bread, focaccia and pizza by using the composition according to the present invention.

The method begins with the preparation of a pre-fermented mixture of gluten-free flours (starter) by mixing an amount of water between 90% and 115% by weight with an amount of mixture of gluten-free flours between 30% and 50% by weight and an amount of brewer's yeast between 2% and 3% by weight and, before using it in the composition of the present invention, the mixture obtained is left to rest for a period of time between 18 and 24 hours at a temperature between 4°C and 6°C to obtain a desired pre-fermentation.

In an implementation of the present invention, the pre-fermented mixture of gluten-free flours is obtained by mixing 1 litre of water, 20 g of brewer's yeast and 1 kg of mixture of gluten-free flours, such as rice flour, buckwheat flour and sorghum flour.

In an implementation of the present invention, the preferred water to brewer's yeast to flour mixture weight ratio in the pre-fermented mixture of gluten-free flours is 1:0.1:1.

The use of the pre-fermented mixture of gluten-free flours allows to obtain a final product (bread, focaccia, pizza) with improved aromatic quality. In fact, the result of the use of the said pre-fermented mixture in the composition of the present invention is the aromatic and fragrance contribution to the final product, which otherwise would not be obtained without the use of this ingredient.

The pre-fermented mixture of gluten-free flours can be made, for example, in a kneading machine.

An amount of mixture of gluten-free flours, as defined in the composition of the present invention, and an amount of water between 90% and 115% by weight to the total weight of the said mixture of gluten-free flours, are added to an amount between 20% and 30% by weight of the said pre-fermented mixture, and kneading is continued.

An amount of brewer's yeast powder between 2% and 3% by weight to the weight of the gluten-free composition of the present invention, is then added.

Preferably, an amount of brewer's yeast powder greater than or equal to 0.7% by weight of the aforesaid amount of mixture of flours is added.

Even more preferably, an amount of brewer's yeast powder greater than or equal to 0.8% and less than or equal to 3% by weight of the aforesaid amount of mixture of flours is added.

The dough of mixture of pre-fermented gluten-free flours, mixture of gluten-free flours, water and brewer's yeast is then kneaded continuously, while a small amount of salt is added after a few minutes, e.g. 1 minute.

The percentage of salt added is greater than or equal to 0.8% and less than or equal to 1.2% by weight of the aforesaid amount of mixture of flours or the amount of salt added to the dough is between 2.5% and 3% by weight to the weight of the gluten-free composition according to the present invention.

Preferably, the added salt is iodized salt.

Kneading is then continued and, after about 4 minutes, an amount of oil is added to the dough.

Preferably, an amount of oil greater than or equal to 6% by weight of the said amount of mixture of flours is added, or the amount of oil added to the dough is between 6% and 8% by weight to the total weight of the composition of the present invention.

Kneading is then continued for about 6 more minutes and then the dough is removed from the kneading machine and left to rest in special containers.

The dough is left to rest for at least 15 minutes at a temperature higher than 16°C. Preferably, the dough is left to rest for at least 20 minutes at a temperature between 10°C and 15°C.

After the aforesaid resting time has elapsed, a plurality of dough balls of at least 250 grams each and at most 350 grams each are made.

The balls made are then left again to rise for at least 90 minutes at a temperature between 20°C and 26°C.

After the rising time has elapsed, the balls can be rolled out to make a pizza or can be suitably packaged to be sold.

As can be clearly inferred from the above description, the invention allows the limits of conventional gluten-free dough to be exceeded.

In addition to being gluten-free, the dough obtained according to the present invention is also completely free of deglutinated starches, lactose and milk proteins, and can therefore also be suitably adopted in vegan diets.

Several changes can be made to the embodiments described in detail, all anyhow remaining within the protection scope of the invention, as defined by the following claims.

Below are some examples/recipes for the gluten-free composition of the present invention. These examples are provided by way of illustration only, without limiting the object of the present invention to these.

The amounts expressed in % in the Examples 2 and 3 refer to the % by weight to the total weight of the composition, if it is not otherwise specified.

Example 1. Preparation of a pre-fermented mixture of gluten-free flour (starter) For the preparation of 2 kg of starter, the following ingredients are mixed:
500 g white rice flour
250 g buckwheat flour
200 g red rice flour
50 g sorghum flour
25 g fresh brewer's yeast
1000 g water at 32°C.

The dough obtained from these ingredients is left to rest overnight (about 18-24 hours) at a temperature of 4°C to obtain pre-fermented dough of gluten-free flours.

### Example 2.

A composition for the preparation of gluten- and lactose-free bread comprises the following ingredients, wherein the sum of the amounts of ingredients totals 100% by weight:
maize starch 40% by weight,
tapioca starch 20% by weight,
mixture of cereal flours 25% by weight (composed of rice flour, buckwheat flour, sorghum flour, red teff flour)
mixture of linseed flours and chia seed flour 5% by weight,
vegetable fibres (psyllium, inulin) 5% by weight,
sweeteners 3% by weight (fructose and apple extract)
roasted maize flour 2% by weight

For the preparation of bread, the pre-fermented mixture (starter) of gluten-free flours obtained in Example 1 is used in an amount of 30% by weight to the total weight of the above-mentioned composition.

The following ingredients are added to this gluten- and lactose-free composition during the preparation of the bread dough, as described in the method of the present invention:
Water 1150 g
Oil 60 g
Dry brewer's yeast 15 g
Iodized salt 25 g

The bread produced with the composition of example 2 is well risen, soft and forms a crisp crust with a final cereal aftertaste. When bitten, it is tasty and does not dry out during chewing.

### Example 3

A composition for the preparation of gluten-free and lactose-free pizza dough comprises the following ingredients, wherein the sum of the amounts of ingredients totals 100% by weight:
maize starch 30% by weight,
tapioca starch 20% by weight,
mixture of cereal flours 25% by weight (composed of rice flour, buckwheat flour, sorghum flour, red teff flour)
raven maize flour 10% by weight,
mixture of linseed flours and chia seed flour 5% by weight,
vegetable fibres (psyllium, inulin) 5% by weight,
sweeteners 3% by weight (fructose and apple extract)
roasted maize flour 2% by weight.

For the preparation of pizza, the pre-fermented mixture (starter) of gluten-free flours obtained in Example 1 is used in an amount of 20% by weight to the total weight of the above-mentioned composition.

The following ingredients are added to this gluten- and lactose-free composition during the preparation of the pizza dough, as described in the method of the present invention:
Water 950 g
Oil 60 g
Dry brewer's yeast 20 g
Iodized salt 25 g

The pizza obtained by the composition of example 3 externally develops a pronounced, soft and, at the same time, crispy crust with a final cereal aftertaste. When bitten, it is crispy and tasty and does not dry out during chewing.

## Claims

1. A composition for the preparation of dough for gluten-free bread, focaccia and pizza, comprising:
- 20% to 30% by weight of a pre-fermented mixture of gluten-free flours;
- 30% to 50% by weight of a mixture of gluten-free flours containing rice flour and/or buckwheat flour and sorghum flour;
- 2% to 3% by weight of brewer's yeast,
- 0.5% to 1% by weight of at least one thickener,
- 6% to 8% by weight of oil,
wherein the percentages refer to the total weight of the same composition.

2. The composition according to claim 1, wherein the pre-fermented mixture of gluten-free flours comprises a mixture of gluten-free flours, brewer's yeast and water.

3. The composition according to claim 2, wherein the mixture of gluten-free flours corresponds to the mixture of gluten-free flours of the composition.

4. The composition according to any one of preceding claims 1 to 3, wherein the thickener is selected from maize starch, tapioca and E464.

5. The gluten-free composition according to any one of preceding claims 1 to 4, further comprising vegetable fibres in amounts equal to at least 2% by weight; said vegetable fibres being selected from inulin and psyllium.

6. The gluten-free composition according to any one of preceding claims 1 to 5, further comprising red teff flour in an amount greater than at least 3% by weight.

7. The gluten-free composition according to any one of preceding claims 1 to 6, further comprising guar flour in an amount equal to or greater than 0.8% by weight.

8. The gluten-free composition according to any one of preceding claims 1 to 7, further comprising fructose and/or maize malt powder in an amount greater than at least 1% by weight.

9. The gluten-free composition according to claim 1, further comprising linseed flour and chia seed flour in an amount greater than at least 1% by weight.

10. The gluten-free composition according to claim 1, further comprising apple extract in an amount greater than at least 0.5% by weight.

11. A method for making gluten-free dough for bread, focaccia and pizza using the gluten-free composition according to any one of preceding claims 1 to 10, comprising the steps of:
- a) preparing a pre-set amount of pre-fermented mixture of gluten-free flours by mixing an amount of water between 90% and 115% by weight with an amount of mixture of gluten-free flours between 30% by weight and 50% by weight and an amount of brewer's yeast between 2% and 3% by weight, wherein the percentages refer to the total weight of the said mixture, and leave this mixture for a period of time between 18 and 24 hours at a temperature between 4°C and 6°C to obtain pre-fermentation;
- b) kneading an amount between 30% and 50% by weight of a mixture of gluten-free flours with an amount between 20% and 30% by weight of the flour mixture prepared in step a) of the method, and with an amount of water between 90% and 115% by weight to the total weight of the said mixture of gluten-free flours;
- c) adding an amount of brewer's yeast powder greater than or equal to 0.7% by weight of the said amount of mixture of flours or an amount between 2% and 2% by weight of the gluten-free composition, to the dough obtained in step b);
- d) continuing to knead the product obtained in step c);
- e) adding an amount of oil in an amount greater than or equal to 6% by weight of the said amount of mixture of gluten-free flours or in an amount between 6% and 8% by weight of the gluten-free composition, to the dough obtained in step d); and
- f) letting the dough obtained in step e) rest for at least 15 minutes at a temperature higher than 16 °C.

12. The method for making gluten-free dough according to claim 11, **characterised by** comprising a step g) of adding a certain amount of salt greater than or equal to 0.8% by weight of the said amount of the mixture of flours downstream of step c).

13. The method for making gluten-free dough according to claim 11 or 12, **characterised by** comprising a step h) of:
- making, upstream of the said step f), a plurality of dough balls of at least 250 grams each and at most 350 grams each.

14. The method for making gluten-free dough according to claim 13, **characterised by** comprising a step i) of:
- letting said plurality of balls rise for at least 90 minutes at a temperature greater than or equal to 20 °C.
